# EUROPÄISCHE PATENTSCHRIFT

(11) **EP 1 494 979 B1**
(45) Veröffentlichungstag und Bekanntmachung des Hinweises auf die Patenterteilung: **03.08.2005**
(21) Anmeldenummer: 03709751.6
(22) Anmeldetag: 06.03.2003
(51) Int. Cl.: C04B 35/03, C03B 5/237

(54) **VERWENDUNG EINES MAGNESIAZIRKONIASTEINS**
USE OF A MAGNESIA ZIRCONIA BRICK
UTILISATION D'UNE PIERRE DE ZIRCONE DE MAGNESIE

(30) Priorität: 17.04.2002 DE 10216879
(43) Veröffentlichungstag der Anmeldung: 12.01.2005
(73) Patentinhaber: Refractory Intellectual Property GmbH & Co. KG, 1100 Wien (AT)
(72) Erfinder: WEICHERT, Thomas, 65307 Bad Schwalbach (DE); SCHMALENBACH, Bernhard, 65187 Wiesbaden (DE); GEITH, Martin, A-8720 Knittelfeld (AT); MAJCENOVIC, Christian, A-8111 Judendorf-Strassengel (AT)
(74) Vertreter: Becker, Thomas U., Dr.
(86) Internationale Anmeldenummer: PCT/EP2003/002270
(87) Internationale Veröffentlichungsnummer: WO 2003/087011

(56) Entgegenhaltungen:
- GB-A- 937 856
- US-A- 4 451 516
- US-B2- 6 509 287
- DATABASE WPI Section Ch, Week 199323 Derwent Publications Ltd., London, GB; Class L01, AN 1993-182996 XP002243846 & BR 9 103 769 A (MAGNESITA SA), 30. März 1993 (1993-03-30)
- DATABASE WPI Section Ch, Week 200010 Derwent Publications Ltd., London, GB; Class L02, AN 2000-109181 XP002243847 & JP 11 310469 A (TOSHIBA CERAMICS CO), 9. November 1999 (1999-11-09)

## Beschreibung

Feuerfeste Werkstoffe und Produkte lassen sich grob in basische und nichtbasische Erzeugnisse gliedern.

Zur Gruppe der basischen (gebrannten) Erzeugnisse zählen Magnesiazirkoniaprodukte (nachstehend MZA genannt) und Produkte auf Basis Magnesiazirkon (nachstehend MZ genannt).

MZA-Produkte werden üblicherweise auf der Basis von Sinter- und/oder Schmelzmagnesia und Zirkoniumdioxid (ZrO₂) hergestellt. Sie bestehen mineralogisch aus Periklas (MgO), stabilisiertem oder nichtstabilisiertem Zirkoniumdioxid und enthalten häufig, zum Teil geringe Mengen, Calziumzirkonat sowie geringe Mengen an silikatischen Phasen. So weit das Zirkoniumdioxid teilweise oder vollständig stabilisiert wird kommt es durch Diffusionsvorgänge zu einer Direktbindung MgO-ZrO₂. Hierdurch werden die mechanischen Heißeigenschaften verbessert.

MZA-Steine weisen eine hohe Temperaturwechselbeständigkeit und eine hohe Feuerfestigkeit auf. Sie werden deshalb vor allem in Drehrohröfen oder Schachtöfen eingesetzt, in denen Kalk, Dolomit, Magnesit oder Zement gebrannt wird.

Ein üblicher Versatz für MZ-Produkte enthält Sinter- und/oder Schmelzmagnesia sowie Zirkonsilikat (ZrO₂ x SiO₂). Das Zirkoniumsilikat reagiert mit dem MgO zu Forsterit und stabilisiertem Zirkoniumdioxid. Überlicherweise wird nicht der gesamt MgO-Anteil zu Forsterit umgewandelt. Im Stein verbleiben deshalb mineralogisch Periklas-Bestandteile. Aufgrund ihrer guten chemischen Beständigkeit, vor allem gegenüber Alkalien, Alkalisalzen beziehungsweise SO₂/SO₃ finden MZ-Produkte in Regenerativkammern von Glasschmelzöfen Verwendung.

Dieser Stand der Technik sowie beispielhafte Rezepturen von MZA-/MZ-Produkten finden sich im "Taschenbuch feuerfeste Werkstoffe" von Gerald Routschka: (ISBN 3-8027-3146-8).

Die Erfindung greift die an sich bekannten Magnesiazirkoniaprodukte auf, verwendet diese aber in einer Regeneratorkammer einer Glaswanne, die zumindest zeitweise oder periodisch mit reduzierender Atmosphäre betrieben wird.

Wie einleitend ausgeführt und bei Routschka nachzulesen werden bisher Magnesiazirkonprodukte in der Gitterung von Glasschmelzwannen eingesetzt, insbesondere im Alkalisulfat-Kondensationsbereich einer solchen Gitterung. Die Temperatur in diesem Bereich liegt bei 800 bis 1100 °C.

Um den NOₓ-Gehalt im Abgas zu senken ist vorgeschlagen worden, eine Glasschmelzwanne mit reduzierender Atmosphäre zu betreiben. Der NOₓ-Gehalt im Abgas kann dabei um den Faktor 3 bis 6 reduziert werden.

Nachteilig ist, dass in den Regenerativkammern abgasseitig reduzierende "Strähnen" entstehen, die die Haltbarkeit der Magnesiazirkonsteine negativ beeinflussen. Es kommt zu einer mindestens teilweisen Zersetzung des Forsterits (Mg₂SiO₄) im Material zu Natrium-/Magnesiumsilikaten. Auch die CaO-haltigen Silikatphasen werden umgewandelt. Im Ergebnis weist die Gitterung nicht mehr die erforderliche Stabilität auf.

Überraschend wurde jetzt festgestellt, dass sich derartige Probleme vermeiden lassen, wenn anstelle der bekannten und für Regenerativkammern von Glaswannen empfohlenen MZ-Produkte solche auf Basis Magnesiazirkonia (MZA) eingesetzt werden.

Der entscheidende Vorteil wird darin vermutet, dass diese Produkte gegenüber MZ-Produkten einen deutlich geringeren Silikatanteil aufweisen, so dass die vorstehend beschriebene Zerstörung des Gefügewerkstoffes nicht oder in deutlich verringertem Umfang auftritt.

ZrO₂ ist gegen die korrosiven Stoffe im Kondensationsbereich der Alkalien äußerst korrosionsbeständig, und zwar auch, wenn die Glaswanne mit reduzierender Atmosphäre gefahren wird und entsprechend eine reduzierende Atmosphäre in die Regenerativkammern gelangt. Dies gilt analog auch dann, wenn die Glaswanne nur temporär reduzierend betrieben wird.

Für die beanspruchte Verwendung ist die Wärmeleitfähigkeit (WLF) der Steine (Gitterungssteine) eine wichtige Kenngröße, ebenso wie die spezifische Wärmekapazität (C) beziehungsweise volumenbezogene Wärmekapazität (Produkt aus spezifischer Wärmekapazität C und Rohdichte R). Daneben interessiert das Verhältnis von Wärmeleitfähigkeit zur spezifischen oder volumenbezogenen Wärmekapazität.

Für alle Parameter werden mit den genannten MZA-Produkten gute Werte erzielt, das heißt
- die hohe Wärmeleitfähigkeit sorgt für einen gewünschten schnellen Durchgang der Wärme durch den Stein,
- eine beispielsweise gegenüber Zirkonia-Steinen um rund 50 % höhere spezifische Wärmekapazität ermöglicht es, mehr Wärme zu speichern,
- durch einen hohen Wert der Temperaturleitfähigkeit (über 1 m²/s) wird ein ausgezeichneter/schneller Temperaturausgleich ermöglicht.

MZA-Produkte weisen auch deutliche Vorteile gegenüber C₂S-gebundenen Magnesiasteinen auf. Durch SO₃ im Abgas wird der Periklas und das CaO in der Dicalziumsilikatphase der C₂S-Produkte zu Sulfaten beziehungsweise Sulfiden umgewandelt. Die Folge ist wieder eine Zerstörung des Steingefüges.

Je geringer der SiO₂-Gehalt (die silikatische Phase) umso günstiger sind die Eigenschaften des Steins für die genannte Anwendung. Der SiO₂-Gehalt beträgt deshalb weniger als 1,0 Gew.%, nach einer weiteren Ausführungsform weniger als 0,5 Gew.% (bezogen auf den gesamten Versatz beziehungsweise das gesamte Formteil).

Der CaO-Gehalt (wobei CaO beispielsweise als Calziumzirkonat vorliegen kann) liegt nach einer Ausführungsform unter 2 Gew.%.

Die mineralogische Zusammensetzung des MZA-Produktes kann sich im bekannten Rahmen bewegen (Routschka, a.a.O.).

Das Produkt enthält 5 bis 35 Gew.% ZrO₂, 65 bis 95 Gew.% MgO sowie maximal 5 Gew.% sonstige Bestandteile.

Nach einer Ausführungsform enthält das Produkt maximal 2 % sonstige Bestandteile.

Die offene Porosität, bestimmt gemäß DIN EN 993-Teil 1 sollte zwischen 11 und 15 Vol.%, nach einer Ausführungsform zwischen 12 und 14 Vol.% betragen.

Nach einem Brand oberhalb 1700 °C lässt sich eine Rohdichte zwischen 3,20 und 3,55 g/cm³, nach einer Ausführungsform zwischen 3,25 und 3,40 g/cm³ erreichen. Dabei wird die Rohdichte gemäß DIN EN 993-Teil 1 ermittelt.

Die Kaltdruckfestigkeit, bestimmt gemäß DIN EN 993-Teil 5 am gebrannten Produkt, liegt zwischen 50 und 150 N/mm² nach einer Ausführungsform zwischen 70 und 85 N/mm².

Die Wärmeleitfähigkeit (bestimmt gemäß "Klasse" u.a. in Ber. Dtsch. Keram. Ges. 34 (1957), 183-189) liegt im Bereich 3-4 W/Km (bei 1000 °C).

Die Materialkörnungen des Versatzes unterliegen prinzipiell keinen Beschränkungen. Der Anteil an Zirkoniumdioxid, der beispielsweise durch Baddeleyit, als technisch erzeugtes Zirkoniumdioxid (unstabilisiert, teilstabilisiert oder vollstabilisiert) eingebracht werden kann, liegt nach einer Ausführungsform im Kornbereich < 0,5 mm, beispielsweise (etwa) hälftig aufgeteilt < 0,1 mm und 0,1 - 0,5 mm.

Der Anteil an Sintermagnesia oder Schmelzmagnesia wird nach einer Ausführungsform im Kornbereich bis 6 mm verwendet. Dabei kann der Anteil > 1 mm die Hälfte bis 2/3 des gesamten Magnesia-Einsatzes ausmachen. Nachstehend sind zwei Rezepturen/Versätze angegeben, einschließlich der nach dem Brand erzielten Eigenschaftsmerkmale.

Die so hergestellten Steine wurden erfolgreich in einem Technikumsversuch getestet, der die im Betrieb einer Gitterung (einer Glasschmelzwanne) auftretenden Bedingungen simuliert. Die Steine wurden insbesondere unter reduzierender Atmosphäre getestet und erwiesen sich gegenüber konventionellen Magnesiazirkonsteinen überlegen.

| | Probe 1 | Probe 2 |
|---|---|---|
| Magnesia (MgO) < 1 mm | 30 % | 20 % |
| Magnesia (MgO) 1-6 mm | 50 % | 50 % |
| ZrO₂ 0,1 bis 0,5 mm | 0 | 15 |
| ZrO₂ < 0,1 mm | 20 | 15 |
| Grünrohdichte (g/cm³) | 3,32 | 3,46 |
| Brand (°C) | 1750 | 1750 |
| Rohdichte nach Brand (g/cm³) | 3,35 | 3,50 |
| Offene Porosität (%) | 12,5 | 14 |
| Kaltdruckfestigkeit (N/mm²) | 55 | 80 |

## Patentansprüche

1. Verwendung eines Magnesiazirkoniasteins, der 5 bis 35 Gew.-% ZrO₂ und 65 bis 95 Gew.-% MgO sowie maximal 5 Gew.-% sonstige Bestandteile enthält und einen SiO₂-Gehalt < 1,0 Gew.-% aufweist, in Regenerativkammern von Glaswannen, die zumindest teilweise mit reduzierender Atmosphäre betrieben werden.

2. Verwendung nach Anspruch 1 mit der Maßgabe, dass der Stein einen CaO-Gehalt < 2,0 Gew.% aufweisen.

3. Verwendung nach Anspruch 1 mit der Maßgabe, dass der Stein maximal 2 % sonstige Bestandteile enthält.

4. Verwendung nach Anspruch 1 mit der Maßgabe, dass die offene Porosität des Steins 11 bis 15 Vol.% beträgt.

5. Verwendung nach Anspruch 1 mit der Maßgabe, dass die Rohdichte des Steins nach dem Brand 3,20 bis 3,60 g/cm³ beträgt.

6. Verwendung nach Anspruch 1 mit der Maßgabe, dass die Kaltdruckfestigkeit des Steins nach dem Brand 50 bis 150 N/mm² beträgt.

## Claims

1. Use of a magnesia-zirconia brick, comprising 5 to 35 wt.-% ZrO₂ and 65 to 95 wt.-% MgO as well as at most 5 wt.-% other components and an SiO₂ content < 1.0 wt.-% in regenerator chambers of glass melting furnaces, which are at least partially operated using a reducing atmosphere.

2. Use according to Claim 1 with the proviso that
the brick has a CaO content < 2.0 wt.-%.

3. Use according to Claim 1 with the proviso that
the brick comprises at most 2% other components.

4. Use according to Claim 1 with the proviso that
the open porosity of the brick is 11 to 15 vol.-%.

5. Use according to Claim 1 with the proviso that
the apparent density of the brick after firing is 3.20 to 3.60 g/cm³.

6. Use according to Claim 1 with the proviso that
the cold compression strength of the brick after firing is 50 to 150 N/mm².

## Revendications

1. Utilisation d'une pierre de zircone de magnésie, comprenant de 5 à 35 % en poids de ZrO₂ et 65 à 95 % en poids de MgO et au maximum 5 % en poids d' autres composants et présentant une teneur en SiO₂ < 1,0 % en poids, dans des chambres de recyclage de cuves en verre, qui fonctionnent au moins partiellement sous atmosphère réductrice.

2. Utilisation selon la revendication 1, **caractérisée en ce que** la pierre a une teneur en CaO < 2,0 % en poids.

3. Utilisation selon la revendication 1, **caractérisée en ce que** la pierre comprend au maximum 2 % d'autres composants.

4. Utilisation selon la revendication 1, **caractérisée en ce que** la porosité ouverte de la pierre est de 11 à 15 % en volume.

5. Utilisation selon la revendication 1, **caractérisée en ce que** la densité brute de la pierre après cuisson est de 3,20 à 3,60 g/cm³.

6. Utilisation selon la revendication 1, **caractérisée en ce que** la résistance à la pression à froid de la pierre après cuisson est de 50 à 150 N/mm².
